# EUROPÄISCHE PATENTSCHRIFT

(11) **EP 1 140 673 B1**
(45) Veröffentlichungstag und Bekanntmachung des Hinweises auf die Patenterteilung: **16.04.2003**
(21) Anmeldenummer: 99963425.6
(22) Anmeldetag: 08.12.1999
(51) Int. Cl.: B65G 45/22, B05B 15/06

(54) **ANLAGE ZUM SCHMIEREN, REINIGEN UND/ODER DESINFIZIEREN VON STETIGFÖRDERERN**
SYSTEM FOR LUBRICATING, CLEANING AND/OR DISINFECTING CONTINUOUS TRANSPORTERS
INSTALLATION POUR LA LUBRIFICATION, LE NETTOYAGE OU LA DESINFECTION DE TRANSPORTEURS CONTINUS

(30) Priorität: 17.12.1998 DE 19858239
(43) Veröffentlichungstag der Anmeldung: 10.10.2001
(73) Patentinhaber: Lang Apparatebau GmbH, 83313 Siegsdorf (DE)
(72) Erfinder: SELBERTINGER, Josef, D-83224 Staudach-Egerndach (DE); WEINERT, Harry, D-09577 Niederwiesa (DE)
(86) Internationale Anmeldenummer: EP9909630
(87) Internationale Veröffentlichungsnummer: WO00035788

(56) Entgegenhaltungen:
- DE-C- 19 501 057
- GB-A- 880 660
- GB-A- 1 509 287
- US-A- 5 564 448

## Beschreibung

Die Erfindung betrifft eine Anlage zum Schmieren, Reinigen und/oder Desinfizieren von Stetigförderern, insbesondere Transportbändern oder Transportketten für Lebensmittelbehälter wie Flaschen, Dosen, Gläser, Tüten und dergleichen, sowie für deren Verpackungen wie Flaschenkästen, mit mindestens einem Düsenstock, der im wesentlichen aus einem Düsenrohr mit mindestens einer Auslaßöffnung und einem an der Auslaßöffnung angebrachten rohrförmigen Halterungsadapter mit einer Düse zum Aufsprühen der Schmier-, bzw. Reinigungs- oder Desinfektionslösung auf die Transporteinrichtungen besteht, wobei das Düsenrohr ein Vierkantrohr ist. Die Düse weist in der Regel einen Schaft auf, und die Kombination von Düse und Halterungsadapter wird nachfolgend als "Schaftdüse" abgekürzt.

Ein derartiger Düsenstock ist aus der DE 195 01 057 C1 bekannt.

Solche Anlagen haben üblicherweise eine zentrale Dosierstation mit einer Dosierpumpe zur Entnahme des Schmiermittelkonzentrats aus einem Gebinde und zur dosierten Abgabe in eine zum Transporteursystem führenden Stichleitung. An die Stichleitung ist eine Verteilerleitung über ein Schmierkreisventil angeschlossen. Die Verteilerleitung führt zum Düsenstock, wo die Lösung auf die einzelnen Düsen verteilt wird. Mit den Düsen wird schließlich die Flüssigkeit auf die Transportbänder bzw.- ketten aufgesprüht.

Die Erfindung findet insbesondere Anwendung in der Lebensmittelindustrie und zwar beim Abfüllen von Getränken und anderen Lebensmitteln in neue oder wiederverwendete Glas- oder Kunststoffflaschen, Dosen, Tüten usw. Dazu werden die Gebinde auf Transportbahnen, z. B. den bereits genannten Transportbändern oder Transportketten, zu den einzelnen Stationen gefördert. In der Regel bestehen die Transportbahnen aus ein- oder mehrbändigen Gliederketten aus Metall oder Kunststoff, die mit einer an den Produktionsablauf abgestimmten Geschwindigkeit angetrieben werden. Sie sind entsprechend den räumlichen Verhältnissen und dem Produktionsablauf in einzelne Abschnitte mit jeweils eigenem Antrieb aufgeteilt.

Die Transportbänder werden mit speziellen Kettengleitmitteln, die auch Bandschmiermittel genannt werden, besprüht, um die Reibung an den besonders verschleißgefährdeten Stellen zu reduzieren. Dabei handelt es sich insbesondere um die Reibflächen zwischen der Kette und der Unterlage, z. B. den Gleitschienen. Weitere kritische Stellen sind die Reibflächen zwischen der Kette und dem Transportgut, die Scharniere der Ketten, die Umlenkrollen und Führungsrollen der Ketten sowie die Reibflächen zwischen aneinanderstoßenden Gebinden.

Entsprechend dem Produktionsablauf und den Anforderungen an die Schmierung der Gliederketten und ihrer Führungen werden einzelne Transportbandabschnitte zu sogenannten Schmierkreisen zusammengefaßt. Die Hauptanforderung an die Schmieranlage besteht darin, eine aus Wasser und wasserlöslichen Chemikalien bestehende Schmiermittellösung mit konstanter Konzentration herzustellen und diese Lösung entsprechend den Anforderungen an die einzelnen Schmierkreise auf die Transportbänder aufzubringen.

In einer Schmieranlage der eingangs genannten Art ist eine Vielzahl von Düsen erforderlich, da jeder Transportkette eine Sprühdüse zugeordnet werden soll. Die Düsen sind auf sogenannten Düsenstöcken oder Düsenträgern angeordnet. Die obengenannte Verteilerleitung ist an den Einlaß des Düsenstockes angeschlossen. Der Düsenstock dient gleichzeitig zum Verteilen der Bandschmiermittellösung zu den einzelnen Düsen und zur Aufnahme und Befestigung der die Düsen tragenden Halterungsadapter. Die Halterungsadapter enthalten häufig auch zusätzlich ein kombiniertes Kugelventilfilter. Die Anzahl der Düsen pro Düsenstock entspricht der Anzahl der Transportketten pro Transportband. Der Abstand der Düsen untereinander ist dem Mittelabstand zweier Transportketten innerhalb eines Transportbandes angepaßt.

Der Düsenstock ist im einzelnen wie folgt aufgebaut. Ein Düsenrohr dient als Träger für die Halterungsadapter und als Verteiler für die Bandschmiermittellösung, die von den einzelnen Düsen versprüht wird. Die röhrchenförmigen Halterungsadapter enthalten den Filter mit dem Druckhalteventil und ein auswechselbares Düsenmundstück, das hier auch Düse oder Düsenkern genannt wird. Mit einer Überwurfmutter wird das Düsenmundstück und der Filter mit Druckhalteventil lösbar am Halterungsadapter befestigt.

Die Erfindung beschäftigt sich mit den Halterungsadaptern und ihrer Befestigung am Düsenrohr.

Im Stand der Technik sind die Halterungsadapter stoffschlüssig durch Löten oder Schweißen mit dem Düsenrohr verbunden.

In alternativen Ausführungen sind die Halterungsadapter formschlüssig mit dem Düsenrohr verbunden. Sie können als Hohlschraube ausgebildet sein, die in eine Gewindebohrung im Düsenrohr eingeschraubt werden. In einer anderen bekannten Befestigungsmöglichkeit sind die Halterungsadapter über Klemm- oder Schraubschellen an die entsprechende Öffnung im Düsenrohr angepreßt.

Die bekannten Befestigungsmöglichkeiten sind mit einer Reihe von Nachteilen behaftet.

Bei der Löt- oder Schweißverbindung führt die Erwärmung zu Gefügeveränderungen, die lokale Korrosionen verursachen können. Daher muß in jedem Fall eine chemische Nachbehandlung, z. B. durch Beizen, erfolgen. Diese stoffschlüssigen Verbindungen zwischen Düsenrohr und Halterungsadaptern können nicht am Einsatzort, sondern müssen in speziellen Werkstätten hergestellt werden. Daher ist eine oft wünschenswerte Korrektur der Anzahl der Düsen und ihrer Abstände unmittelbar vor dem Einsatz nicht möglich.

Nachteilig an den formschlüssigen Verbindungen ist insbesondere, daß sich an den vielen Spalten, Innenkanten, Übergängen und Hinterschneidungen im Bereich der formschlüssigen Verbindungen Schmutzpartikel ablagern, die Nährböden für Pilze, Bakterien, Keime und andere Mikroorganismen bilden. Dieser Umstand ist besonders nachteilig in der Lebensmittelindustrie, wo auf eine größtmögliche Hygiene Wert zu legen ist.

Eine Anlage der eingangs genannten Art ist aus der DE 195 01 057 C1 bekannt. Hier sind die einstückigen Halterungsadapter formschlüssig mit dem Düsenrohr verbunden, da die Halterungsadapter als von einer Seite aus steckbare und anschließbare Hohlnieten ausgebildet sind. Derartige Halterungsadapter haben eine Reihe von Vorteilen gegenüber dem genannten Stand der Technik. Da es sich hier jedoch um eine Nietverbindung handelt, lassen sich zwar die in den Aufnahmen eingesetzten Düsen, nicht aber die Halterungsadapter selber an Ort und Stelle auswechseln. Als weitere Nachteile sind die offenen Gewindegänge zwischen den Überwurfmuttern und den Halterungsadaptern sowie der Spalt zwischen den Düsen und den Überwurfmuttern zu nennen. An diesen Stellen können sich verstärkt Verunreinigungen ansetzen.

Aus der DE 196 07 224 A1 ist außerdem eine schwenkbare Flachstrahl-Sprühdüse bekannt, welche unverdrehbar in einem Düsenkopf gehalten wird. Der Düsenkopf selber ist über einen Bajonettverschluß an einem hohlen Düsenträger mit einem Kugelkopf angebracht. Der Bajonettverschluß besteht aus zwei gegenüberliegenden, nach innen gerichteten Verriegelungsnocken des Düsenkopfes und jeweils einer axialen Nut an der Außenseite des Düsenträgers, wobei die axiale Nut in eine teilweise umlaufende tangentiale Nut übergeht. Da die tangentiale Nut nicht vollständig an der Außenseite des Düsenträgers umläuft, ist die Endposition des Düsenkopfes gegenüber dem Düsenträger eindeutig definiert. Denn nach dem axialen Einschieben des Düsenkopfes in den Düsenträger läßt sich der Düsenkopf nur soweit verschwenken, bis die Verriegelungsnocken am Ende der tangentialen Nut anliegen.

Nachteilig ist hier der komplizierte Aufbau des mehrteiligen Halterungsadapters, welcher außerdem nicht ohne weiteres zum Anschluß an ein als Vierkantrohr ausgebildetes Düsenrohr geeignet ist. Da der Halterungsadapter mehrteilig ist, findet sich dort eine Vielzahl von Spalten, Hinterschneidungen und Nuten, in denen sich Schmutz festsetzen kann. Außerdem sind hier keine farbig codierten Düsen vorgesehen, bei denen die Farbe einer Durchflußmenge zugeordnet ist.

Der Erfindung liegt daher die Aufgabe zugrunde, bei der Anlage der eingangs genannten Art einen Düsenstock mit einem einfachen, wenig aufwendigen, am Einsatzort auf einfache Weise anzubringenden und auswechselbaren Halterungsadapter zu entwickeln, welche außerdem nach der Verbindung mit dem Düsenrohr keine oder erheblich geringere Möglichkeiten zur Ablagerung von Schmutz bietet.

Diese Aufgabe wird bei der Anlage der eingangs genannten Art erfindungsgemäß dadurch gelöst, daß die Auslaßöffnung als Langloch ausgebildet ist, daß am einlaßseitigen Ende des Halterungsadapters eine Nut zwischen einer zur Anlage an der Außenseite des Vierkantrohrs geeigneten Schulter und mindestens einem endseitigen, sich radial nach außen erstreckenden Haltelappen vorgesehen ist, daß die Breite der Nut im wesentlichen der Wandstärke des Vierkantrohres entspricht und der Durchmesser der Nut im wesentlichen gleich oder kleiner als die Breite des Langlochs ist und daß die radiale Erstreckung des Haltelappens in der einen Richtung größer als die Breite, aber kleiner oder gleich der Länge des Langlochs und in einer anderen Richtung kleiner oder gleich der Breite des Langlochs ist.

Damit wird eine einfache, wirtschaftliche Verbindung zwischen dem Halterungsadapter und dem Düsenrohr erreicht, wobei der Halterungsadapter schnell und problemlos am Einsatzort mit dem Düsenrohr verbunden und auch dort ausgewechselt werden kann.

Eine besondere geometrische Ausgestaltung der Auslaßöffnung im Vierkantrohr, z. B. ein Innengewinde, ist nicht erforderlich.

Vorzugsweise sind zwei einander gegenüberliegende Haltelappen vorgesehen.

Weiterhin wird zur Abdichtung des durchströmten Innenraumes nach außen hin eine elastisch nachgiebige Dichtung, insbesondere ein O-Ring, zwischen dem Halterungsadapter und der Außenseite des Vierkantrohrs vorgeschlagen. Vorzugsweise liegt diese Dichtung in einer Nut ein, die an der zum Vierkantrohr hin gerichteten Außenseite der genannten Schulter eingeformt ist.

Die Halterungsadapter können unterschiedliche Farben zur Kennzeichnung der Eigenschaften der jeweils verwendeten Düse (Durchfluß-Querschnitt, Sprühstrahlwinkel und Sprühstrahlform) haben. Dabei kann eine separate Düse (Düsenkern) im Auslaß des Halterungsadapters vorgesehen sein. In diesem Fall ist es von Vorteil, wenn der den Düsenmantel bildende Halterungsadapter aus Kunststoff hergestellt und der aus Edelstahl, Keramik oder Hartmetall hergestellte Düsenkern in den Düsenmantel eingepreßt ist.

Alternativ kann auch auf eine separate Düse (Düsenkern) verzichtet werden, wenn der Auslaß des einstückigen Halterungsadapters als Düse geformt ist.

Auch in diesem Fall ist es von Vorteil, wenn die unterschiedlichen Halterungsadapter durch ihre Farbe gekennzeichnet sind.

In einer weiteren Ausgestaltung der Erfindung wird vorgeschlagen, daß am Einlaß des Halterungsadapters ein Verbindungselement, z. B. ein Gewinde, zum Anbringen eines Filters, eines Druckhalteventils, einer kombinierten Filter-Ventil-Einheit oder dergleichen vorgesehen ist.

Alternativ oder zusätzlich kann ein Filter, ein Druckhalteventil oder eine kombinierte Filter-Ventil-Einheit am Einlaß des Düsenrohrs, also an zentraler Stelle, angebracht sein.

Weiterhin wird vorgeschlagen, daß die an der Innenseite des Vierkantrohrs anliegende Fläche des Haltelappens eine derartige Steigung aufweist, so daß beim Drehen des in die Auslaßöffnung des Vierkantrohrs eingesteckten Halterungsadapters ein zunehmender Druck auf die Dichtung ausgeübt wird. Insbesondere liegt der Winkel dieser Steigung bei 3° bis 7°. Nach dem Einstecken des Halterungsadapters in die Auslaßöffnung des Vierkantrohrs wird beim Verschwenken des Halterungsadapters in die gewünschte Stellung eine leichte Verpressung der Dichtung und auf diese Weise eine Verbesserung der Abdichtung des durchströmten Innenraums zum Außenraum hin erreicht.

Um eine definierte Stellung des Halterungsadapters und damit der Düsen im Düsenrohr auf einfache Weise zu gewährleisten, wird außerdem vorgeschlagen, daß die Innenseite des Vierkantrohrs mindestens ein Rastelement und die an der Innenseite anliegende Fläche des Haltelappens ein korrespondierendes Rastelement aufweist. Dabei sind diese Rastelemente an derjenigen Stelle vorgesehen, die beim Einrasten der Elemente die gewünschte Endposition des Halterungsadapters bildet.

Vorzugsweise wird die Raststellung bei einer Drehung des Halterungsadapters um etwa 90° erreicht.

Im folgenden wird ein Ausführungsbeispiel der Erfindung anhand von Zeichnungen näher beschrieben. Es zeigen
- Figur 1: einen erfindungsgemäßen Düsenstock in Explosionsdarstellung mit Halterungsadaptern in vier Varianten,
- Figur 2: einen Längsschnitt durch den Düsenstock nach Figur 1,
- Figur 3: einen Querschnitt durch den Düsenstock entlang der Linie III-III in Figur 2 und
- Figur 4: eine Einzelheit von Figur 2.

In allen Zeichnungen haben gleiche Bezugszeichen die gleiche Bedeutung und werden daher gegebenenfalls nur einmal erläutert.

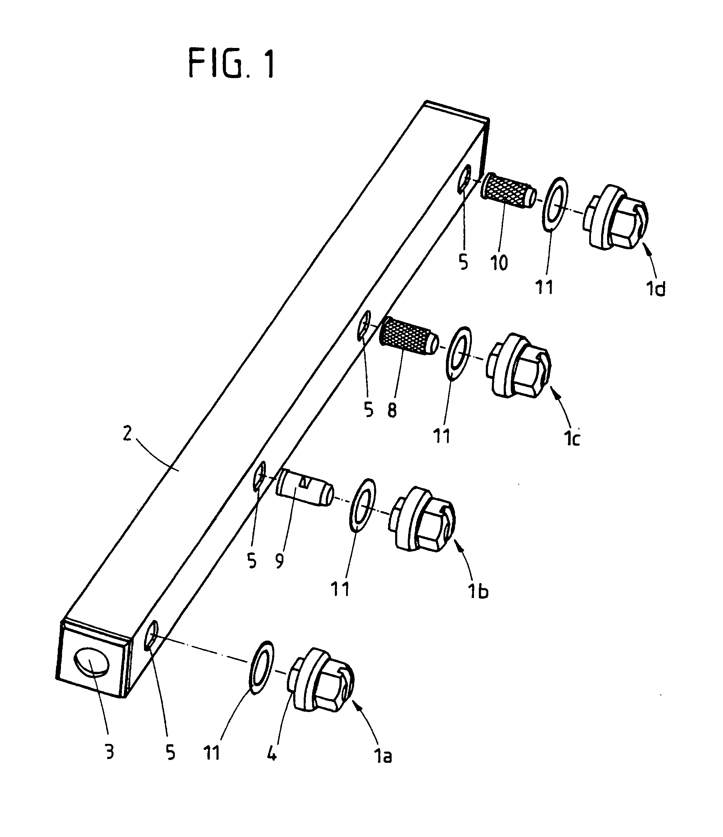

Das in Figur 1 dargestellte, als Vierkantrohr ausgebildete Düsenrohr 2 weist vier unterschiedliche Kombinationen von mit Düsen ausgestatteten Halterungsadaptern 1a, 1b, 1c und 1d (Schaftdüsen) mit Filter, Druckhalteventil oder einer Kombination einer Filter-Ventil-Einheit gemäß der Erfindung auf.

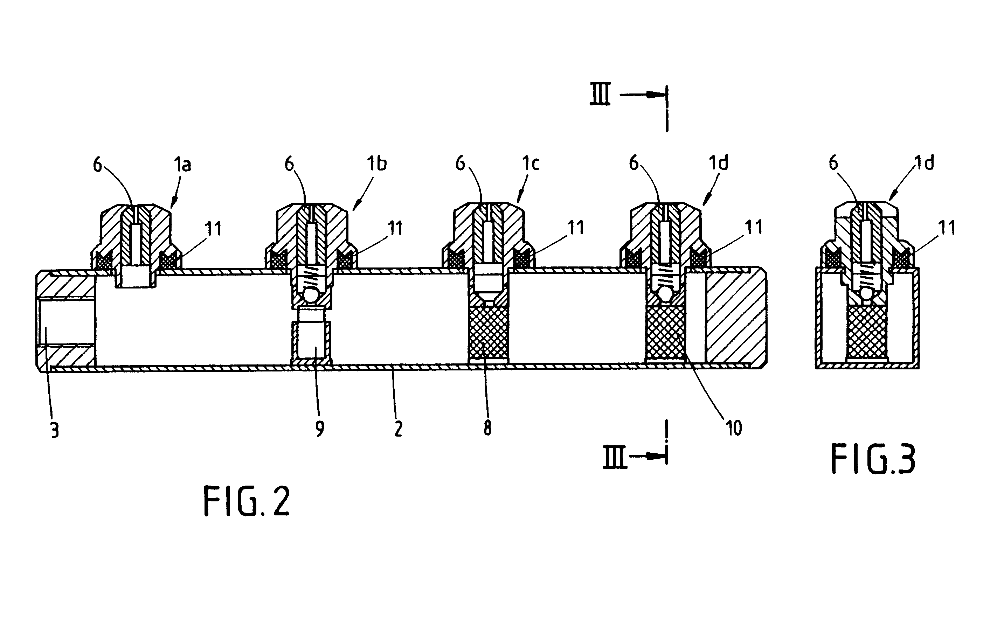

Das Vierkantrohr 2 hat am einen Ende einen Einlaß 3 für die zu versprühende Flüssigkeit. Das andere Ende ist geschlossen. An einer der Längsseiten des Vierkantrohrs 2 sind Langlöcher 5 für die Halterungsadapter 1a bis 1d zu erkennen. Am einlaßseitigen Ende der Halterungsadapter kann ein Druckhalteventil 9 (Halterungsadapter 1b), ein Filter 8 (Halterungsadapter 1d) oder eine kombinierte Filter-Ventil-Enheit 10 (Halterungsadapter 1c) eingeschraubt werden. Die Elemente 8, 9 und 10 liegen beim fertiggestellten Düsenstock innerhalb des Vierkantrohrs 2, wie aus Figur 2 hervorgeht. Alternativ kann auch ein Halterungsadapter 1a ohne ein einlaßseitig angeschraubtes Zusatzelement verwendet werden.

Einzelheiten der am Einlaß der Halterungsadapter angeschraubten zusätzlichen Elemente sind besonders deutlich in den Figuren 2 und 3 zu erkennen.

Im vorliegendem Ausführungsbeispiel sind die Halterungsadapter 1a bis 1d aus unterschiedlich gefärbtem Kunststoff hergestellt, wobei die verschiedenen Farben als Kennung der unterschiedlichen Durchflußmengen dienen. In die Halterungsadapter 1a bis 1d ist jeweils ein Düsenkern (Düse) 6 aus Edelstahl, Keramik oder Hartmetall eingepreßt worden. Der Düsenkern 6 bestimmt durch seine Form sowohl den Durchflußquerschnitt und den Sprühstrahlwinkel als auch die Form des Sprühstrahles.

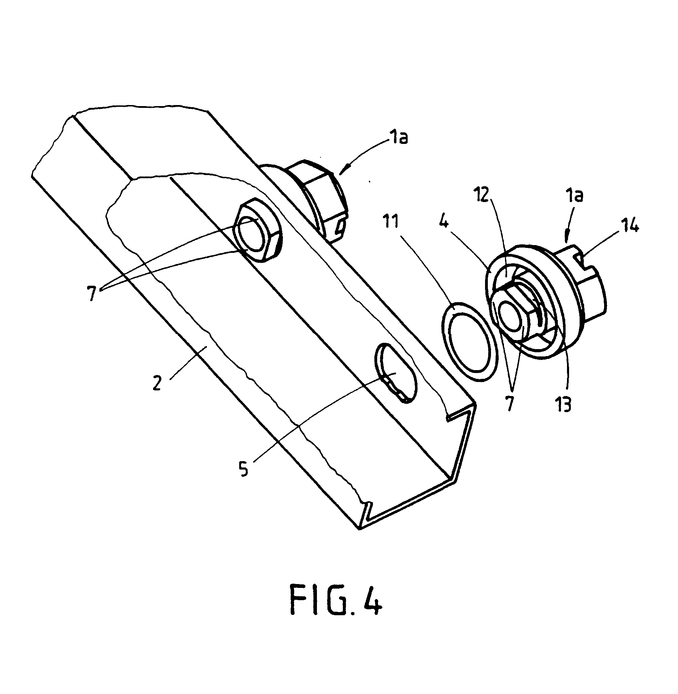

Der Aufbau der Halterungsadapter 1a bis 1d im einzelnen geht am besten aus Figur 4 hervor. Das einlaßseitige Ende des Halterungsadapters 1a ist verdickt, so daß eine Schulter 4 gebildet ist, welche bei eingesetztem Halterungsadapter an der Außenseite des Vierkantrohrs 2 anliegt. Innerhalb der Anlagefläche der Schulter 4 ist eine ringförmige Nut 12 vorgesehen, welche zur Aufnahme eines Dichtungsrings, speziell eines O-Rings 11, dient.

Außen am einlaßseitigen Ende des Halterungsadapters 1a sind zwei Haltelappen 7 angeformt, welche beide zusammen in ihrer Größe und Form dem zugeordneten Langloch 5 im Vierkantrohr 2 entsprechen. Zwischen den Haltelappen 7 und der Schulter 4 ist eine Nut 13 gebildet, welche beim fertiggestellten Düsenstock unmittelbar innerhalb des Langlochs 5 liegt.

Bei der Montage des Halterungsadapters 1a am Düsenrohr 2 wird der Halterungsadapter 1a mit den beiden um 180° versetzten Haltelappen durch das Langloch 5 gesteckt und um 90° verdreht, wodurch eine formschlüssige Verbindung zwischen dem Halterungsadapter 1a und dem Vierkantrohr 2 hergestellt wird. Durch eine leichte Steigung an der Innenseite der Haltelappen wird der in der Nut 12 einliegende O-Ring 11 leicht verpreßt. Wenn die Endposition beim Verdrehen des Halterungsadapters 1a erreicht wird, rasten die in den Figuren 1 bis 4 nicht dargestellten Rastelemente an der Innenseite der Haltelappen 7 sowie an der Innenseite des Vierkantrohrs 2 ein, wodurch dem Benutzer gezeigt wird, daß die gewünschte Endposition erreicht ist.

Das Eindrehen des Halterungsadapters 1a wird durch eine auslaßseitige Quernut 14 erleichtert, in welche ein entsprechendes Werkzeug eingreifen kann.

### Bezugszeichenliste

- 1a, 1b, 1c, 1d: Halterungsadapter
- 2: Vierkantrohr, Düsenrohr
- 3: Einlaß des Düsenrohrs
- 4: Schulter
- 5: Langloch
- 6: Düse, Düsenkern
- 7: Haltelappen
- 8: Filter
- 9: Druckhalteventil
- 10: Filter-Ventil-Einheit
- 11: O-Ring
- 12: ringförmige Nut für Dichtung
- 13: Nut
- 14: Quernut

## Patentansprüche

1. Anlage zum Schmieren, Reinigen und/oder Desinfizieren von Stetigförderern, insbesondere Transportbändern oder Transportketten für Lebensmittelbehälter wie Flaschen, Dosen, Gläser, Tüten und dergleichen, sowie für deren Verpackungen wie Flaschenkästen, mit mindestens einem Düsenstock, der im wesentlichen aus einem Düsenrohr (2) mit mindestens einer Auslaßöffnung (5) und einem an der Auslaßöffnung (5) angebrachten rohrförmigen Halterungsadapter (1) mit einer Düse (6) zum Aufsprühen der Schmier-, bzw. Reinigungs- oder Desinfektionslösung auf die Transporteinrichtungen besteht, wobei das Düsenrohr (2) ein Vierkantrohr ist,
**dadurch gekennzeichnet,**
**daß** die Auslaßöffnung als Langloch (5) ausgebildet ist, daß am einlaßseitigen Ende des Halterungsadapters (1) eine Nut (13) zwischen einer zur Anlage an der Außenseite des Vierkantrohrs (2) geeigneten Schulter (4) und mindestens einem endseitigen, sich radial nach außen erstreckenden Haltelappen (7) vorgesehen ist, daß die Breite der Nut (13) im wesentlichen der Wandstärke des Vierkantrohres (2) entspricht und der Durchmesser der Nut (13) im wesentlichen gleich oder kleiner als die Breite des Langlochs (5) ist und daß die radiale Erstreckung des Haltelappens (7) in der einen Richtung größer als die Breite, aber kleiner oder gleich der Länge des Langlochs (5) und in einer anderen Richtung kleiner oder gleich der Breite des Langlochs (5) ist.

2. Anlage nach Anspruch 1,
**dadurch gekennzeichnet,**
**daß** zwei einander gegenüberliegende Haltelappen (7) vorgesehen sind.

3. Anlage nach einem der vorhergehenden Ansprüche,
**dadurch gekennzeichnet,**
**daß** eine elastisch nachgiebige Dichtung, insbesondere ein O-Ring (11), zwischen dem Halterungsadapter (1) und der Außenseite des Vierkantrohrs (2) angeordnet ist.

4. Anlage nach einem der vorhergehenden Ansprüche,
**dadurch gekennzeichnet,**
**daß** eine separate Düse (6) im Auslaß des Halterungsadapters vorgesehen ist.

5. Anlage nach einem der Ansprüche 1 bis 3,
**dadurch gekennzeichnet,**
**daß** der Auslaß des einstückigen Halterungsadapters als Düse geformt ist.

6. Anlage nach einem der vorhergehenden Ansprüche,
**dadurch gekennzeichnet,**
**daß** am Einlaß des Halterungsadapters (1) ein Verbindungselement zum Anbringen eines Filters (8), eines Druckhalteventils (9), einer kombinierten Filter-Ventil-Einheit (10) oder dergleichen vorgesehen ist.

7. Anlage nach einem der vorhergehenden Ansprüche,
**gekennzeichnet durch**
ein Filter, ein Druckhalteventil oder eine kombinierte Filter-Ventil-Einheit am Einlaß (3) des Düsenrohrs.

8. Anlage nach einem der Ansprüche 3 bis 7,
**dadurch gekennzeichnet,**
**daß** die an der Innenseite des Vierkantrohrs (2) anliegende Fläche des Haltelappens (7) eine derartige Steigung aufweist, so daß beim Drehen des in die Auslaßöffnung (5) des Vierkantrohrs (2) eingesteckten Halterungsadapters (1) ein zunehmender Druck auf die Dichtung (11) ausgeübt wird.

9. Anlage nach dem vorhergehenden Anspruch,
**dadurch gekennzeichnet,**
**daß** der Winkel der Steigung bei 3° bis 7° liegt.

10. Anlage nach einem der vorhergehenden Ansprüche,
**dadurch gekennzeichnet,**
**daß** die Innenseite des Vierkantrohrs (2) mindestens ein Rastelement und die an der Innenseite anliegende Fläche des Haltelappens (7) ein korrespondierendes Rastelement aufweist.

11. Anlage nach dem vorhergehenden Anspruch,
**dadurch gekennzeichnet,**
**daß** die Raststellung bei einer Drehung des Halterungsadapters um etwa 90° erreicht wird.

## Claims

1. System for lubricating, cleaning and/or disinfecting continuous transporters, particularly transport belts or transport chains for food and drink containers such as bottles, cans, jars, bags and the like, and for the packaging materials thereof, such as bottle boxes, with at least one nozzle support which substantially consists of a nozzle pipe (2) with at least one outlet opening (5) and a tubular mounting adapter (1), which is mounted at the outlet opening (5), with a nozzle (6) for spraying lubricating, cleaning or disinfecting solution onto the transport devices, wherein the nozzle pipe is a square pipe, **characterised in that** the outlet opening is formed as a slot (5), that a groove (13) is provided at the inlet end of the mounting adapter (1) between a shoulder (4) suitable for contact with the outer side of the square pipe (2) and at least one radially outwardly extending retaining tab (7) at the end, that the width of the groove (13) substantially corresponds with the wall thickness of the square pipe (2) and the diameter of the groove (13) is substantially equal to or smaller than the width of the slot (5) and that the radial extent of the retaining tab (7) in one direction is larger than the width, but smaller than or equal to the length, of the slot (5) and in another direction is smaller than or equal to the width of the slot (5).

2. System according to claim 1, **characterised in that** two mutually opposite retaining tabs (7) are provided.

3. System according to any one of the preceding claims, **characterised in that** a resiliently flexible seal, particularly an O-ring (11), is arranged between the mounting adapter (1) and the outer side of the square pipe (2).

4. System according to any one of the preceding claims, **characterised in that** a separate nozzle (3) is provided in the outlet of the mounting adapter.

5. System according to any one of claims 1 to 3, **characterised in that** the outlet of the integrally constructed mounting adapter is formed as a nozzle,

6. System according to any one of the preceding claims, **characterised in that** a connecting element for attachment of a filter (8), a pressure maintaining valve (9), a combined fitter-valve unit (10) or the like is provided at the inlet of the mounting adapter (1).

7. A system according to any one of the preceding claims, **characterised by** a filter, a pressure maintaining valve or a combined filter-valve unit at the inlet of the nozzle pipe.

8. System according to any one of claims 3 to 7, **characterised in that** the surface of the retaining tab (7) contacting the inner side of the square pipe (2) has such an inclination that on rotation of the mounting adapter (1) inserted into the outlet opening (5) of the square pipe (2) an increasing pressure is exerted on the seal (11).

9. System according to any one of the preceding claims, **characterised in that** the angle of the inclination is 3 to 7°.

10. System according to any one of the preceding claims, **characterised in that** the inner side of the square pipe (2) has at least one detent element and the surface of the retaining tab (7) bearing against the inner side has a corresponding detent element.

11. System according to any one of the preceding claims, **characterised in that** the detent setting is attained on rotation of the mounting adapter through approximately 90°.

## Revendications

1. Installation pour la lubrification, le nettoyage et/ou la désinfection des transporteurs continus, en particulier les bancs de transporteuse ou les chaînes de transport pour récipients destinés aux produits alimentaires comme les bouteilles, les flacons, les verres, les sacs, etc, ainsi que pour leur emballage comme les cartons de bouteille, avec au moins un porte-buses qui se compose pour l'essentiel d'une lance (2) avec au moins une ouverture de sortie (5) et un adaptateur de fixation (1) tubulaire fixé à l'ouverture de sortie (5) avec une buse (6) pour la pulvérisation de la solution de graissage ou selon les cas de nettoyage ou de désinfection sur les dispositifs de transport, la lance (2) étant un tube à section rectangulaire,
**caractérisée en ce que**
l'ouverture de sortie est formée en trou oblong (5), à l'extrémité du côté entrée de l'adaptateur de fixation (1) est prévue une rainure (13) entre un épaulement (4) approprié pour la fixation au côté extérieur du tube à section rectangulaire (2) et au moins une languette de maintien (7) du côté de l'extrémité, s'étendant radialement vers l'extérieur, la largeur de la rainure (13) correspond essentiellement à l'épaisseur de la paroi du tube à section rectangulaire (2) et le diamètre de la rainure (13) est essentiellement égal ou inférieur à la largeur du trou oblong (5), et l'étendue radiale de la languette de maintien (7) dans une direction est plus grande que la largeur mais plus petite ou égale à la longueur du trou oblong (5), et est dans une autre direction inférieure ou égale à la largeur du trou oblong (5).

2. Installation selon la revendication 1,
**caractérisée par**
deux languettes de maintien (7) opposées l'une à l'autre.

3. Installation selon l'une quelconque des revendications précédentes,
**caractérisée par**
un joint élastique souple, notamment un joint torique (11) prévu entre l'adaptateur de fixation (1) et le côté extérieur du tube à section rectangulaire (2).

4. Installation selon l'une quelconque des revendications précédentes,
**caractérisée par**
une buse séparée (6) prévue dans la sortie de l'adaptateur de fixation.

5. Installation selon l'une quelconque des revendications 1 à 3,
**caractérisée en ce que**
la sortie de l'adaptateur de fixation en une seule pièce est en forme de buse.

6. Installation selon l'une quelconque des revendications précédentes,
**caractérisée par**
un élément de liaison prévu à l'entrée de l'adaptateur de fixation (1) pour installer un filtre (8), une soupape de retenue de pression (9), une unité filtre-soupape (10) ou un moyen analogue.

7. Installation selon l'une quelconque des revendications précédentes,
**caractérisée en ce que**
l'entrée (3) du tube de buse comporte un filtre, une soupape de retenue de pression ou une unité combinée filtre-soupape.

8. Installation selon l'uns quelconque des revendications 3 à 7,
**caractérisée en ce que**
la surface de la languette de maintien (7) appliquée contre le côté intérieur du tube à section rectangulaire (2) présente une pente telle que lorsqu'on tourne l'adaptateur de fixation (1) engagé dans l'orifice de sortie du tube à section rectangulaire (2), une pression croissante s'exerce sur le joint (11).

9. Installation selon l'une quelconque des revendications précédentes,
**caractérisée en ce que**
l'angle de la pente est de 3°à 7°.

10. Installation selon l'une quelconque des revendications précédentes,
**caractérisée en ce que**
le côté intérieur du tube à section rectangulaire (2) comporte au moins un élément d'accrochage et la surface de la languette de maintien (7) appliquée contre le côté intérieur comporte un élément d'accrochage correspondant.

11. Installation selon l'une quelconque des revendications précèdentes,
**caractérisée en ce que**
la position d'accrochage s'obtient pour une rotation de l'adaptateur de fixation d'environ 90°.
